# EUROPÄISCHE PATENTSCHRIFT

(11) **EP 3 663 074 B1**
(45) Veröffentlichungstag und Bekanntmachung des Hinweises auf die Patenterteilung: **15.03.2023**
(21) Anmeldenummer: 18209713.9
(22) Anmeldetag: 03.12.2018
(51) Int. Cl.: B29C 64/40, B29C 64/124, B29C 64/182, B29C 64/135, B33Y 10/00, B33Y 80/00, B28B 1/00

(54) **VERFAHREN ZUR ADDITIVEN FERTIGUNG VON FORMKÖRPERN**
METHOD FOR ADDITIVE PRODUCTION OF MOULDED BODIES
PROCÉDÉ DE FABRICATION ADDITIVE DE CORPS MOULÉS

(43) Veröffentlichungstag der Anmeldung: 10.06.2020
(73) Patentinhaber: Ivoclar Vivadent AG, 9494 Schaan (LI); Technische Universität Wien, 1040 Wien (AT)
(72) Erfinder: EBERT, Jörg, 9470 Buchs (CH); SCHÖNHERR, Julia Anna, 1060 Wien (AT); GMEINER, Robert, 1060 Wien (AT)
(74) Vertreter: Uexküll & Stolberg

(56) Entgegenhaltungen:
- EP-A1- 3 205 421
- US-A- 5 135 379
- US-A- 5 216 616
- US-A- 5 386 500
- US-A1- 2018 036 205

## Beschreibung

Die vorliegende Erfindung betrifft ein Verfahren zum Herstellen von Formkörpern aus einem Baumaterial, insbesondere aus mit Keramik gefülltem Schlicker, mittels eines additiven Fertigungsverfahrens, bei dem während eines Bauvorgangs ein schichtweiser Aufbau eines Formkörpers durch aufeinanderfolgendes Verfestigen von Schichten des Baumaterials in einem Schichtgebiet mit einer für die jeweilige Schicht vorgegebenen Kontur durch Einwirkung elektromagnetischer Strahlung erfolgt.

Der schichtweise oder kontinuierliche Aufbau von Formkörpern gehört zu den aufbauenden Verfahren, die unter den Oberbegriff generative Fertigung oder additive Fertigung (Additive Manufacturing) fallen. Darunter wird eine Klasse von Verfahrensweisen verstanden, bei denen ein dreidimensionales Objekt (Formkörper) direkt auf Grundlage eines digitalen Modells des Formkörpers (z.B. ein CAD-Modell) aufgebaut wird. Dazu wird beim schichtweisen Aufbau das digitale Modell des Formkörpers in eine Vielzahl von aufeinanderfolgenden dünnen Scheiben unterteilt, wobei jede Scheibe eine durch das Modell definierte Kontur hat. Der Aufbauprozess wird durch Hinzufügen von Materialschichten durchgeführt, wobei jede Schicht so prozessiert wird, dass die durch das digitale Modell für diese Schicht vorgegebene Kontur erzeugt wird. Schließlich bildet der Stapel von übereinanderliegenden, miteinander verbundenen Schichten den Formkörper, der bei einigen Verfahren weiter bearbeitet wird, zum Beispiel durch Wärmebehandlungen zum Entbindern und Sintern.

Der Begriff "Kontur" wird im Zusammenhang mit der vorliegenden Erfindung allgemein gebraucht und ist nicht auf eine einfache geschlossene Begrenzungslinie eingeschränkt, die ein einfach zusammenhängendes Gebiet umschließt, sondern kann mehrere separate Konturabschnitte umfassen, die nebeneinander liegende Flächen umschließen, die zusammen die jeweilige Schicht bilden, oder es können äußere und innere Konturabschnitte vorhanden sein, die ringförmige Gebiete der Schicht definieren.

Das Baumaterial, aus dem der Formkörper aufgebaut wird, wird durch elektromagnetische Strahlung ausgehärtet. Es kann neben photopolymerisierbaren Polymervorläuferverbindungen Füllstoffe wie Keramik-, Glas-Keramik- oder Metallpulver und gegebenenfalls Dispergiermittel und andere Additive enthalten. Die vorliegende Erfindung ist insbesondere auf die Herstellung von Keramik- oder Glaskeramikformteilen (sogenannten Grünlingen), wie dentalen Inlays, Onlays, Veneers, Kronen, Brücken und Gerüsten gerichtet.

Aus der WO 2010/045950 A1 ist ein Beispiel für ein Verfahren zum Aufbau eines Formkörpers bekannt, das insbesondere den Aufbau von Dentalrestaurationen aus keramischen Schlickern betrifft, die eine flüssige photopolymerisierbare Komponente und darin verteilten Füllstoff aus keramischem oder Glaskeramischem Pulver enthalten. Bei diesem bekannten Verfahren wird der Formkörper sukzessive durch übereinander ausgehärtete Schichten aufgebaut. Dabei wird eine Bauplattform vertikal beweglich über einem Wannenboden gehalten, der zumindest im Baugebiet lichtdurchlässig ist. Unterhalb des Wannenbodens befindet sich eine Belichtungseinheit. Die Bauplattform wird zunächst in den Schlicker in der Wanne soweit abgesenkt, bis zwischen Bauplattform und Wannenboden nur noch eine Schicht mit der gewünschten Schichtdicke verbleibt. Anschließend wird diese Schicht durch die Belichtungseinheit mit der durch das digitale Modell für diese Schicht vorgegebenen Kontur durch die Belichtungseinheit belichtet und dadurch ausgehärtet. Nach Anheben der Bauplattform wird Schlicker, z.B. mit einer Rakel, aus der Umgebung nachgeführt und danach die Bauplattform erneut in den Schlicker abgesenkt, wobei die Absenkung so gesteuert wird, dass der Abstand zwischen der zuletzt ausgehärteten Schicht und dem Wannenboden eine Schicht Baumaterial mit der gewünschten Dicke definiert. Die letzten Schritte werden so oft wiederholt, bis durch die aufeinanderfolgende Aushärtung von Schichten mit jeweils durch das digitale Modell vorgegebener Kontur der Formkörper mit der gewünschten dreidimensionalen Form aufgebaut ist.

Nach vollständigem Aufbau des Formkörpers kann dieser mit der Bauplattform entnommen werden. In der Regel schließen sich daran noch weitere Bearbeitungsschritte an. In dem oben dargestellten Verfahren wird durch die schichtweise Polymerisation des Baumaterials ein Grünling hergestellt. Dieser wird dann auf hohe Temperaturen aufgeheizt, um das Bindemittel, in diesem Fall Photopolymer, zu entfernen. Dies geschieht bei hohen Temperaturen durch thermische Zersetzung und Reaktionen, die das Polymer in leichtere Moleküle zersetzen, die an die Oberfläche diffundieren und schließlich als Gase entweichen. An diesen Vorgang der Entbinderung kann sich dann zur weiteren Verfestigung eine weitere Temperaturbehandlung anschließen, in der die verbliebenen Keramikpartikel in dem Formkörper gesintert werden.

Zur Sicherstellung der Stabilität im Bauprozess werden bei einigen Fertigungsverfahren Stützstrukturen aus dem Baumaterial mit aufgebaut, um den Formkörper während der Fertigung zu fixieren und auskragende Schichten und Überhänge gegen die Schwerkraft zu stützen. Stützstrukturen werden oftmals auch dazu verwendet, bei einigen additiven Fertigungsverfahren auftretende prozessbedingte Eigenspannungen abzustützen. Nachdem der Bauprozess abgeschlossen ist, müssen die Stützstrukturen zugänglich und möglichst leicht entfernbar sein.

Aus der EP 3 205 421 A1 ist ein Verfahren zur Herstellung von Formkörpern nach dem Oberbegriff des Anspruchs 1 bekannt. Das Verfahren beinhaltet die Fertigung von Stützstrukturen während des Fertigungsprozesses eines Formkörpers, wobei die Stützstrukturen wenigstens einen Teil des Formkörpers umgeben.

Aus der US 5,216,616 A ist ein System und Verfahren zur rechnerunterstützen Fertigung und Herstellung von Formkörpern bekannt. Während der Fertigung des Formkörpers kann eine Umhüllung mit Stegen gefertigt werden, um eine Stützumgebung für den Formkörper zu schaffen.

Prozessbedingte Eigenspannungen sind vor allem das Resultat thermischer Einflüsse auf den Formkörper. Eine Reihe von additiven Fertigungsverfahren ist mit starken Temperaturschwankungen verbunden. So sehen eine Reihe von Fertigungsverfahren Entbinderungs- und Sinterprozesse vor, in denen es infolge ungleichmäßiger Abkühlraten des Formkörpers zu Verzugserscheinungen kommen kann. Sinterverzug ist ein häufig beobachtetes Phänomen bei der Herstellung dichter Keramikbauteile. Dies ist gerade in Bereichen, die ein hohes Maß an Genauigkeit verlangen, nicht erwünscht. Als Beispiel ist hier die Dentaltechnik zu nennen. Eine Zahnkrone in Form des Grünkörpers kann im additiven Prozess beispielsweise dadurch hergestellt werden, indem photoreaktiver, mit Keramikpulver gefüllter Schlicker Schicht für Schicht ausgehärtet wird und das Bauteil die gewünschte dreidimensionale Form erhält. Im nächsten Schritt wird das Bauteil von Schlickerresten befreit und eventuelle Stützstrukturen, die zur Strukturierung notwendig waren, werden entfernt. In den Schritten der thermischen Nachbearbeitung werden zunächst beim Entbindern die Bindemittel herausgebrannt und anschließend die Keramik dicht gesintert. Hierbei kann es technisch bedingt zu Verzugserscheinungen des Formkörpers kommen. Ein möglichst geringer Verzug und eine hohe Passgenauigkeit sind aber für die Anbindung der Zahnkrone an den Zahnstumpf von wesentlicher Bedeutung.

Die zuverlässige Fixierung des Formkörpers während des Bauvorgangs oder während der nachfolgenden Prozesse trägt folglich wesentlich zu der Genauigkeit und Qualität des gefertigten Formkörpers bei.

Es ist daher Aufgabe der vorliegenden Erfindung, eine Verbesserung der Halterung des Formkörpers vorzuschlagen.

Die der Erfindung zugrunde liegende Aufgabe wird durch ein Verfahren mit den Merkmalen des Anspruchs 1 gelöst.

Vorteilhafte Ausgestaltungen der vorliegenden Erfindung sind Gegenstand der Unteransprüche.

Beim Bauvorgang wird zusammen mit dem Formkörper schichtweise aus dem Baumaterial ein den Formkörper auf Abstand umlaufender hülsenartiger Rahmen aufgebaut. Dieser hülsenartige Rahmen, der nach Art einer Hülse eine umlaufende Seitenwand umfasst, erstreckt sich entlang eines Umfangs des Formkörpers, so dass der Formkörper innerhalb des hülsenartigen Rahmens angeordnet ist. Darüber hinaus werden beim Bauvorgang eine Vielzahl stiftartiger Verbindungen integral mit dem Rahmen und dem Formkörper aufgebaut. Diese stiftartigen Verbindungen oder Stege sind um den Formkörper herum verteilt und verbinden den Rahmen und den Formkörper auf unterschiedlichen Seiten des Formkörpers miteinander. Die Umfangsfläche des Formkörpers kann in mehrere Flächenabschnitte unterteilt sein, z.B. im Fall eines prismenförmigen Rahmens, und die stiftartigen Verbindungen können entlang des Umfangs des Formkörpers an unterschiedlichen Flächenabschnitten des Formkörpers mit diesem verbunden sein. Auch die innere Umfangsfläche des Rahmens kann in mehrere Innenwandabschnitte unterteilt sein, z.B. im Fall eines prismenförmigen Rahmens, und die stiftartigen Verbindungen können an unterschiedlichen Innenwandabschnitten des Rahmens ausgebildet sein.

Erfindungsgemäß ist vorgesehen, dass der Formkörper ein Zahnersatzteil, wie z.B. eine Zahnkrone, ein Inlay, ein Onlay, ein Veneer, eine Brücke oder ein Gerüst ist und dass die stiftartigen Verbindungen, die den Formkörper mit dem Rahmen verbinden, an den oralen oder vestibulären Flächen des Zahnersatzteils aufgebaut werden.

Der hülsenartige Rahmen hat vorzugsweise die Form eines an den Grundflächen offenen Zylinders. Unter Zylinder wird hier ein geometrischer Körper verstanden, bei dem zwei parallele, ebene, kongruente Grundflächen durch einen Mantel miteinander verbunden sind, wobei die Grundflächen selbst wie gesagt offen sind. Die Kontur der Grundflächen kann irgendeine geschlossene Kurve sein und ist nicht auf Kreisform beschränkt. Die Kontur der Grundflächen können auch geschlossene Polygone sein, wobei die resultierenden Körper in diesem Fall auch als Prismen bezeichnet werden. Die Längsachse solcher Rahmen ist die Zylinderachse.

Zonen mit stiftartigen Verbindungen können gleichmäßig in einem Winkelabstand von beispielsweise 90° um eine Längsachse des Formkörpers vorgesehen sein. Die Längsachse des Formkörpers läuft in diesem Sinne in die gleiche Richtung wie die Längsachse des Rahmens. Die Längsachse des hülsenartigen Rahmens ist eine zentrale Achse, die der Rahmen umläuft. Möglich sind aber auch andere, vor allem auch ungleichmäßige Winkelabstände zwischen den stiftartigen Verbindungen. Die Anordnung der stiftartigen Verbindungen ist in erster Linie abhängig von der Form des Formkörpers, der an unterschiedlichen Flächen seines Körpers gestützt werden soll.

Im Gegensatz zu einfachen Stützstrukturen bietet der integral ausgebildete Rahmen einen verbesserten Halt für den Formkörper während des Bauprozesses und nachfolgender Fertigungsprozesse. Anders als einfache Stützstrukturen, die den Formköper nur von unten abstützen, bietet der Rahmen die Möglichkeit, um den Umfang des Formkörpers herum eine Vielzahl von Befestigungsstellen zu errichten, die auf unterschiedlichen Seiten des Formköpers mit diesem verbunden sind. Die stiftartigen Verbindungen sind derart ausgebildet, dass der Formkörper durch Durchbrechen der stiftartigen Verbindungen aus dem Rahmen gelöst werden kann. Hierzu kann die Dicke der stiftartigen Verbindungen entsprechend dimensioniert werden.

Vorzugsweise verlaufen die stiftartigen Verbindungen senkrecht zu der unmittelbaren Umgebung der entsprechenden Fläche des Formkörpers und/oder des Rahmens. Die stiftartigen Verbindungen können so ausgestaltet sein, dass sie den Abstand zwischen dem Rahmen und dem Formkörper auf kürzestmögliche Weise überbrücken. So werden Kräfte optimal in den Rahmen übertragen, der aufgrund seiner ringförmigen Geschlossenheit die Kräfte ohne wesentliche Verformung aufnimmt. Rahmen und stiftartige Verbindungen bilden somit ein optimales Versteifungsgerüst.

Besondere Vorteile bietet die integrale Ausbildung des Formkörpers und des den Formkörper umlaufenden Rahmens auch in Bezug auf das Auftreten von Verzugserscheinungen in Form von Wärmebehandlungen, denn der den Formkörper umlaufende Rahmen schützt den Formkörper in effizienter Weise vor Verzug. Die an unterschiedlichen Positionen angreifenden stiftartigen Verbindungen bilden eine umfassende Stützstruktur und Haltestruktur für den Formkörper und verhindern damit Verzugserscheinungen in dem Formkörper in effizienter Weise.

Die stiftartigen Verbindungen können einzeln oder in Gruppen um den Formkörper herum verteilt sein. Im Falle eines prismenförmigen Rahmens bedeutet eine Anordnung in Gruppen beispielsweise, dass mehrere stiftartige Verbindungen an einem gemeinsamen Flächenabschnitt des Formkörpers und/oder an einem gemeinsamen Innenwandabschnitt des Rahmens ausgebildet sind. Somit können Gruppen von stiftartigen Verbindungen entlang eines Umfangs des Formkörpers an unterschiedlichen Flächenabschnitten des Formkörpers mit diesem verbunden sein. Die Gruppenanordnung von stiftartigen Verbindungen bringt eine leicht lösbare, gleichzeitig aber besonders feste Halterung des Formkörpers in dem Rahmen mit sich.

Gemäß einer weiteren Ausführungsform der Erfindung ist vorgesehen, dass die stiftartigen Verbindungen an der Innenseite des Rahmens aufgebaut werden. Dadurch ist der Materialverbrauch klein und die Außenbereiche des Rahmens können für weitere Formkörper genutzt werden.

Der Rahmen kann eine Vielzahl von Formen im Querschnitt aufweisen. So ist beispielsweise mit Blick in Längsrichtung der Hülse im Querschnitt eine Kreisform möglich. Im Querschnitt sind aber auch andere Formen denkbar. So sehen weitere Ausführungsbeispiele der Erfindung im Querschnitt mehreckige Hülsen vor, beispielsweise sechseckige oder achteckige Querschnittsformen, die eine erhöhte Stabilität vorweisen.

Nach einer weiteren Ausführungsform der Erfindung erfolgt die Verfestigung des Baumaterials innerhalb der vorgegebenen Kontur durch ortsselektive magnetische Bestrahlung, beispielsweise im Rahmen von stereolithographischer Photopolymerisation.

Gemäß einer weiteren Ausführungsform der Erfindung ist das Baumaterial ein Keramikschlicker.

Der Formkörper und der Rahmen können auf einer Bauplattform gefertigt werden, beispielsweise durch folgenden Prozess. Baumaterial wird zwischen der Bauplattform und einer transparenten Scheibe gefördert. Das Baumaterial wird durch die Scheibe hindurch ortselektiv belichtet, um oberhalb der Basisscheibe innerhalb einer vorgegebenen Kontur auszuhärten. Nachdem eine Schicht des Baukörpers, d.h. die integrale Einheit von Formkörper und Rahmen, verfestigt ist, wird sukzessiv die Bauplattform relativ zu der Basisscheibe angehoben. Anschließend wird Baumaterial nachgeführt und die vorhergehenden Schritte werden fortgesetzt, bis der Baukörper durch ortselektives Aushärten des Baumaterials aufgebaut ist.

Gemäß einer weiteren Ausführungsform der Erfindung entspricht die Dimension des Formkörpers in Axialrichtung des hülsenartigen Rahmens im Wesentlichen der Dimension des Rahmens. Dadurch kann eine Abstützung des Formkörpers entlang seiner gesamten Länge erfolgen.

Gemäß einer weiteren Ausführungsform der Erfindung wird neben den stiftartigen Verbindungen noch eine zusätzliche Stützstruktur, beispielsweise in Form einer Kreuzabstützung, die den Formkörper zusätzlich von unten stützt, aufgebaut.

Gemäß einer weiteren Ausführungsform der Erfindung wird nach dem Bauvorgang des Rahmens und des Formkörpers eine Entbinderung und/oder Sinterung durchgeführt. Dies ist möglich bevor der Formkörper aus dem Rahmen gelöst wird, wobei der Rahmen den Formkörper während der Wärmebehandlung vor Verzugserscheinungen schützt. Alternativ sieht eine weitere Ausführungsform der Erfindung vor, dass nach dem Bauvorgang eine gemeinsame Entbinderung des Rahmens und des Formkörpers erfolgt. In einem weiteren Schritt wird der Formkörper aus dem Rahmen gelöst und anschließend gesintert. Dieser zweistufige Prozess, bei dem der Formkörper im Rahmen zunächst vorgesintert wird und die Endkristallisation nur an dem Formkörper selbst erfolgt, erleichtert die Entfernung der stiftartigen Verbindungen und einer eventuellen zusätzlichen Stützstruktur vom gesinterten Formkörper. Damit verbundener Werkzeugverschleiß wird dadurch reduziert.

Der Abstand zwischen dem Rahmen und dem Formkörper ist derart gewählt, dass die Strukturen nicht zusammenwachsen, sondern nur durch die stiftartigen Verbindungen und eine eventuell zusätzliche Stützstruktur miteinander verbunden sind. Es hat sich dabei als vorteilhaft herausgestellt, wenn der Abstand zwischen dem Rahmen und dem Formkörper wenigstens 1,4 mm, bevorzugt wenigstens 1,5 mm, beträgt.

Die Rahmenstärke, d.h. die Dicke der Rahmenwand, kann wenigstens 1,3 mm betragen, was zu einem geringen Materialverbrauch beiträgt, aber ausreichend Stützkräfte liefert.

Eine weitere Ausführungsform der Erfindung sieht vor, dass der Formkörper aus dem Rahmen gelöst wird, indem die stiftartigen Verbindungen von dem Formkörper abgetrennt werden. Durch die stiftartigen Verbindungen ist es nicht notwendig, den Rahmen aufzuschneiden oder zu zerbrechen, was den gesamten Fertigungsprozess effizienter gestaltet. So kann der Formkörper durch ausschließliches Brechen der stiftartigen Verbindungen und Trennen einer eventuellen zusätzlichen Stützstruktur aus dem Rahmen gelöst werden.

Eine weitere Ausführungsform der Erfindung sieht vor, dass beim Bauvorgang eine integrale Rahmenanordnung mit einer Vielzahl von Rahmen und darin angeordneten, insbesondere individuellen, Formenkörpern aufgebaut wird. Die Rahmenordnung kann die Form eines Arrays oder einer Matrix aufweisen, in der mehrere Rahmen in einer Ebene nebeneinander angeordnet sind und jeweils einen Formkörper halten. Da die Rahmen miteinander verbunden sind, stützen diese sich gegenseitig und tragen zu einer festen Struktur der einzelnen Halterungen für die einzelnen Formkörper bei. Durch das Vorsehen der integral ausgebildeten Rahmen kann eine Vielzahl von individuell gestalteten Formkörpern in einem Herstellungsprozess gleichzeitig hergestellt werden.

Um die gleichzeitige Herstellung mehrerer Formkörper zu verbessern, sieht eine weitere Ausführungsform der Erfindung vor, dass die Rahmenanordnung eine Wabenstruktur aufweist, wobei sich benachbarte Rahmen vorzugsweise einen Rahmenwandabschnitt teilen. Die Wabenstruktur gilt allgemein als eine optimale Form mit einem idealen Verhältnis von Wandmaterial zu Volumen. Gleichzeitig stabilisiert diese Form die Gesamtkonstruktion.

Eine weitere Ausführungsform der Erfindung sieht vor, dass die Rahmenanordnung mehrere übereinandergestapelte Rahmenanordungsebenen aufweist, innerhalb derer jeweils mehrere Rahmen und Formkörper, beispielsweise in Form einer Wabenstruktur, angeordnet sind. Das Aneinanderreihen und Stapeln der Rahmen erhöht die Produktionsmenge an hergestellten Formkörpern in signifikanter Weise. Kennzeichnend dabei ist, dass mehrere Rahmen und Formkörper in einer Ebene zusammengefasst werden, z.B. in einer Matrixanordnung mit Blickrichtung auf die Ebene. In einer parallel zu dieser ersten Ebene angeordneten zweiten Ebene werden weitere Rahmen und Formkörper aneinandergereiht, z.B. in Matrixanordnung, so dass die beiden Ebenen gestapelt, d.h. in Stapelbauweise, angeordnet sind.

Gemäß einer weiteren Ausführungsform der Erfindung sind benachbarte Rahmenanordungsebenen, d.h. der Verbund von mehreren Rahmen und Formkörpern, voneinander beabstandet und durch integral ausgebildete Stege oder stiftartige Verbindungen miteinander verbunden. Durch Brechen dieser Stege sind die benachbarten Rahmenanordungsebenen dadurch in einfacher Art und Weise voneinander trennbar.

Grundsätzlich ist es möglich, dass zusammen mit dem Rahmen beim Bauvorgang an dem Rahmen Informationsträgerelemente, wie Nummern, QR-Codes oder sonstige Markierungen aufgebaut werden, die der Identifikation der individuellen Formkörper dienen.

Nach einer weiteren Ausführungsform der Erfindung wird beim Bauvorgang eine zusätzliche Stützstruktur integral mit dem Rahmen und dem Formkörper aufgebaut, die den Formkörper während des Bauvorgangs zusätzlich sichert und während des Bauvorgangs auf den Formkörper wirkende Kräfte aufnimmt. Wenn, wie in der WO 2010/045950 A1 beschrieben, der sich im Bauprozess befindliche Formkörper entlang einer Verfahrachse wiederkehrend in den Schlicker abgesenkt und aus diesem angehoben wird, können Kräfte zwischen dem Formkörper, dem Rahmen und dem Wannenboden wirken und die Struktur des gesamten Bauobjektes beeinträchtigen. Insbesondere treten nach dem Aushärten einer Schicht, wenn diese beim Anheben der Bauplattform vom Wannenboden abgelöst wird, unter Umständen, z.B. wenn ausgedehnte ausgehärtete Gebiete am Wannenboden haften, erhebliche Zugkräfte auf, die von der Bauplattform über den Rahmen auf den im Aufbau befindlichen Formkörper übertragen werden müssen. Diese Zugkräfte können effektiv durch die Stützstruktur aufgenommen werden. Vorzugsweise ist die Stützstruktur entlang der Verfahrachse der Bauplattform zwischen der der Bauplattform gegenüberliegenden Seite des Rahmens und dem Formkörper angeordnet, um die Zugkräfte, die entlang der Verfahrachse auf den Formkörper wirken, aufzunehmen.

Das erfindungsgemäße Verfahren hat sich besonders vorteilhaft im Bereich der Dentaltechnik erwiesen. Erfindungsgemäß ist daher vorgesehen, dass der Formkörper ein Zahnersatzteil, wie z.B. eine Zahnkrone, ein Inlay, ein Onlay, ein Veneer, eine Brücke oder ein Gerüst ist.

Gerade bei Dentalprodukten ist die Genauigkeit der Flächen von besonderer Bedeutung. Bei Zahnersatzteilen, wie beispielsweise bei Kronen, sind die occlusalen Oberflächen, aber auch die innere Oberfläche, die der Anbindung an den Zahnstumpf dient, von besonderer Bedeutung. Es empfiehlt sich daher, die Verbindungen zwischen dem Formkörper und dem Rahmen an anderer Stelle vorzunehmen. Besonders geeignete Stellen sind hierbei die oralen oder vestibulären Flächen des Zahnersatzteils, wobei die oralen Flächen des Zahnersatzteils besonders bevorzugt sind. Diese Flächen der Zahnersatzteile sind ideal für die Anbringung der Stützstruktur geeignet. Insgesamt trägt dies zu einer hohen Genauigkeit der relevanten Flächen, insbesondere der occlusalen oder der inneren Oberfläche des Zahnersatzteils bei.

Die vorliegende Erfindung wird im Folgenden anhand lediglich bevorzugter Ausführungsbeispiele und den Zeichnungen näher erläutert:

Es zeigen:
- Figur 1a,b: in einer Seitenansicht die digitale Vorlage einer Zahnkrone auf einer Stützstruktur sowie in einer schrägen Draufsicht die gefertigte Zahnkrone nach dem Sintern,
- Figur 2a,b: einen nach einer erste Ausführungsform der Erfindung hergestellten Rahmen mit einem darin angeordneten Formkörper, und
- Figur 3: eine nach einer weiteren Ausführungsform der Erfindung hergestellte Rahmenanordnung.

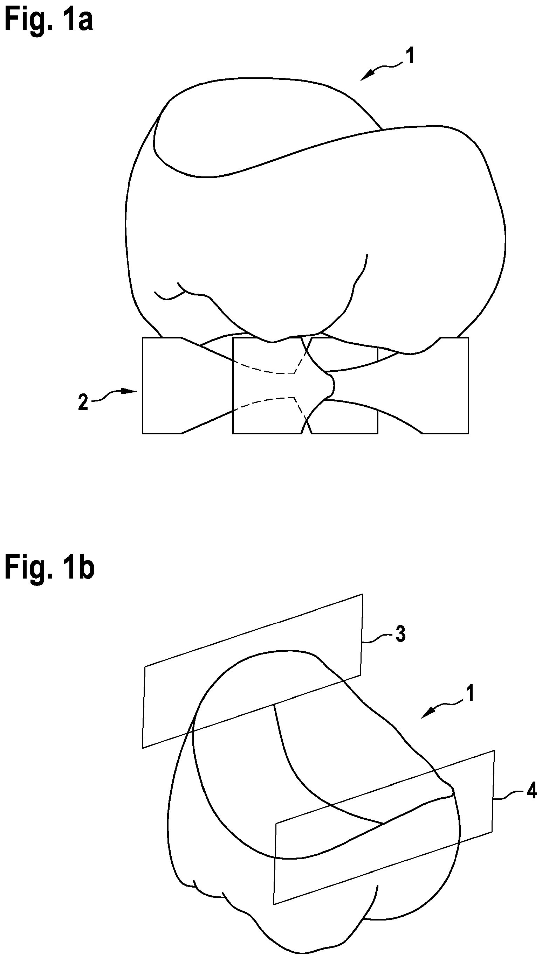

**Figur 1a** zeigt die digitale Vorlage eines Formkörpers 1 in Form einer Zahnkrone auf einer Stützstruktur 2. Anschließend wird diese digitale Vorlage genutzt, um mittels eines additiven Fertigungsverfahrens, bei dem mit Keramik gefüllter Schlicker ortselektiv gehärtet wird, den Formkörper 1 und die Stützstruktur 2 schichtweise aufzubauen. Die Zahnkrone 1 wird durch die Stützstruktur 2 an den Höckern der occlusalen Fläche der Zahnkrone gestützt. Während des Herstellungsprozesses, bei dem eine Sinterung stattfindet, bewirkt die Stützstruktur 2 eine Versteifung der Krone 1. Die Stützstruktur 2 wird nach der Herstellung der Krone entfernt.

**Figur 1b** zeigt die Zahnkrone 1 nach der Fertigung. Eingerahmt sind hier die Bereiche 3 und 4, die von der Anordnung der Stützstruktur 2 abgewandt sind. In diesen Bereichen kommt es zu vergleichsweise großen Verzugserscheinungen während des Sinterprozesses.

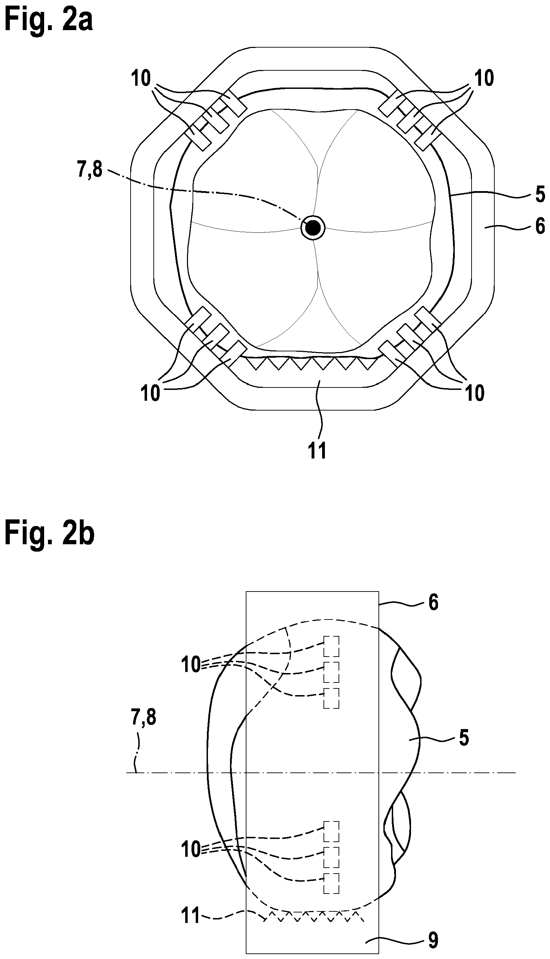

**Figuren 2a** und **2b** zeigen einen Formkörper und einen Rahmen, die integral nach einer ersten Ausführungsform der Erfindung hergestellt sind. Beim Bauvorgang wurde zusammen, d.h. integral mit dem Formkörper 5 (Zahnkrone) schichtweise aus dem Baumaterial der den Formkörper 5 auf Abstand umlaufende hülsenartige Rahmen 6 aufgebaut. Der hülsenartige Rahmen 6 erstreckt sich in Axialrichtung 7 bzw. entlang seiner Längsachse 8. Die Seitenwand 9 des Rahmens 6 verläuft um die Achsen 7 und 8. Die Darstellung in der Figur 2a ist eine Draufsicht auf die Kaufläche der Zahnkrone entlang der Achsen 7 und 8. Die Figur 2b stellt den Rahmen 6 und die darin angeordnete Krone 5 in einer Seitenansicht dar.

Im Querschnitt, d.h. in Richtung der Längsachse 8 gesehen, weist der Rahmen eine mehreckige Form auf, hier in Form eines Achtecks. Diese Form verleiht dem Rahmen 6 zusätzliche Stabilität. Die Seitenwand 9 erstreckt sich um den Umfang des Formkörpers 5 um die Achse 7. An der Innenwand der Seitenwand 9 des Rahmens 6 wurden beim Bauvorgang integral mit dem Rahmen und dem Formkörper ausgebildete stiftartige Verbindungen 10 aufgebaut. Diese sind in Axialrichtung 7 gesehen um den Formkörperumfang herum verteilt und verbinden den Formkörper mit dem Rahmen. Die Verbindungen 10 dienen insbesondere als Verzugsvermeidungsstrukturen und verhindern einen Verzug des Formkörpers bei Wärmebehandlungsmaßnahmen.

Zusätzlich zu den Verbindungen 10 ist noch eine Stützstruktur 11 unterhalb des Formkörpers 5 integral mit dem Formkörper und dem Rahmen 6 aufgebaut. Das Bauobjekt, d.h. die Gesamtheit aus Rahmen 6, Formkörper 5, Verbindungen 10 und Stützstruktur 11, ist während des Bauvorgangs auf einer nicht dargestellten Bauplattform aufgebaut worden, die in Figur 2a an der Außenseite der unteren Rahmenwand, an deren Innenseite sich der Stützkörper 11 befindet, liegt. Ein entsprechendes Verfahren, bei dem das sich im Bau befindliche Bauobjekt an der Bauplattform wiederholend in den Schlicker eingetaucht und wieder angehoben und so von der Bauplattform ausgehend schichtweise aufgebaut wird, wurde einleitend in Bezug auf die WO 2010/045950 A1 beschrieben. Die während des Bauprozesses auf den Formkörper 5 wirkenden Zugkräfte verlaufen durch die Stützstruktur 11 und werden durch diese effektiv aufgenommen und über den Rahmen auf die Bauplattform übertragen.

In Axialrichtung 7 entspricht die Dimension des Formkörpers 5, d.h. die Länge, über die sich der Formkörper 5 in Axialrichtung 7 erstreckt, im Wesentlichen der Dimension des Rahmens 6 in Axialrichtung 7. Die stiftartigen Verbindungen sind in Gruppen zu je drei stiftartigen Verbindungen über den Umfang des Formkörpers 5 verteilt, hier im Wesentlichen in einem Abstand von ca. 90°. Andere Winkelabstände (z.B. 45°, 60°, 120°) sind ebenfalls möglich. Entscheidend ist jedoch, dass die stiftartigen Verbindungen an unterschiedlichen Abschnitten des Umfangs des Formkörpers angreifen, um eine effiziente Fixierung des Formkörpers 5 im Fertigungsprozess zu gewährleisten. Die Dicke der stiftartigen Verbindungen 10 ist so gewählt, dass diese einfach zu durchbrechen sind, wodurch der Formkörper 5 in einfacher Art und Weise aus dem Rahmen 6 herausgelöst werden kann.

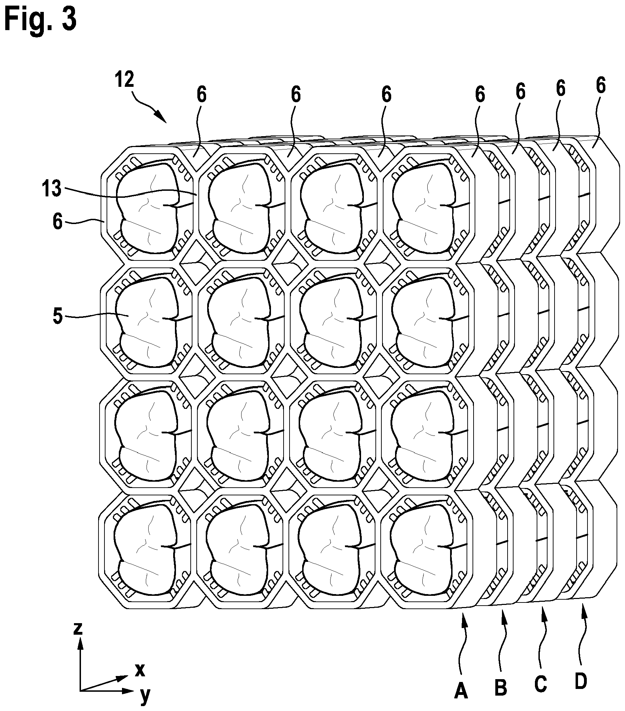

**Figur 3** zeigt mehrere Rahmen 6, die nach Art eines Arrays oder in einer Matrix-Anordnung in einer Ebene A (Z-Y) zusammengefasst sind und jeweils einen individuell gestalteten Formkörper 5 halten. Diese Rahmenanordnung 12 weist in der Ebene A eine Wabenstruktur auf. Innerhalb dieser Wabenstruktur der Ebene A teilen sich benachbarte Rahmen 6 einen gemeinsamen Rahmenwandabschnitt 13. In X-Richtung hinter der ersten Rahmenanordnungsebene A ist eine weitere Rahmenanordnungsebene B aufgebaut, die ebenso wie die Rahmenanordnungsebene A aus einer Vielzahl von in Matrixanordnung angeordneten Rahmen mit darin angeordneten Formkörpern in Wabenstruktur besteht. Die Ebenen A und B sind voneinander beabstandet, was bedeutet, dass ein Formkörper der Ebene A nicht unmittelbar mit dem dahinterliegenden Formkörper der Ebene B verbunden ist. Tatsächlich sind die beiden Ebenen A und B lediglich über mit den Rahmenanordnungsebenen A und B integral ausgebildete Stege (nicht dargestellt) miteinander verbunden, d.h. in X-Richtung hintereinander liegende Rahmen sind nicht direkt miteinander verbunden. Diese Stege sind derart ausgebildet, dass sie leicht zu durchbrechen sind, wodurch die Ebenen A/B leicht voneinander getrennt werden können.

An die Ebene B schließen weitere Ebenen C/D an, die analog zu den Ebenen A/B ausgebildet sind.

### Bezugszeichenliste

- 1: Zahnkrone
- 2: Stützstruktur
- 3: Bereich mit besonderer Verzugsneigung
- 4: Bereich mit besonderer Verzugsneigung
- 5: Formkörper
- 6: Rahmen
- 7: Axialrichtung
- 8: Längsachse
- 9: Seitenwand des Rahmens
- 10: Verbindungen
- 11: Stützstruktur
- 12: Rahmenanordnung
- 13: gemeinsamer Rahmenwandabschnitt

- A: 1. Rahmenanordnungsebene
- B: 2. Rahmenanordnungsebene
- C: 3. Rahmenanordnungsebene
- D: 4. Rahmenanordnungsebene

## Patentansprüche

1. Verfahren zum Herstellen von Formkörpern (5) aus einem Baumaterial mittels eines additiven Fertigungsverfahrens, bei dem während eines Bauvorgangs ein schichtweiser Aufbau eines Formkörpers (5) durch aufeinanderfolgendes Verfestigen von Schichten des Baumaterials in einem Schichtgebiet mit einer für die jeweilige Schicht vorgegebenen Kontur durch Einwirkung elektromagnetischer Strahlung erfolgt,
wobei beim Bauvorgang zusammen mit dem Formkörper (5) schichtweise aus dem Baumaterial ein den Formkörper auf Abstand umlaufender hülsenartiger Rahmen (6) aufgebaut wird, und wobei beim Bauvorgang darüber hinaus eine Vielzahl stiftartiger Verbindungen (10) integral mit dem Rahmen (6) und dem Formkörper (5) aufgebaut werden, die um den Formkörper (5) herum verteilt sind und die den Formkörper (5) mit dem Rahmen (6) verbinden,
**dadurch gekennzeichnet, dass** der Formkörper (5) ein Zahnersatzteil, wie eine Zahnkrone, ist und die stiftartigen Verbindungen (10), die den Formkörper (5) mit dem Rahmen (6) verbinden, an den oralen oder vestibulären Flächen des Zahnersatzteils aufgebaut werden.

2. Verfahren nach Anspruch 1, **dadurch gekennzeichnet, dass** die stiftartigen Verbindungen (10) an der Innenseite des Rahmens (6) aufgebaut werden.

3. Verfahren nach Anspruch 1 oder 2, **dadurch gekennzeichnet, dass** die Verfestigung des Baumaterials innerhalb der vorgegebenen Kontur durch ortsselektive elektromagnetische Bestrahlung erfolgt.

4. Verfahren nach einem der vorhergehenden Ansprüche, **dadurch gekennzeichnet, dass** das Baumaterial ein Keramikschlicker ist.

5. Verfahren nach einem der vorhergehenden Ansprüche, **dadurch gekennzeichnet, dass** in Axialrichtung (7) des hülsenartigen Rahmens (6) die Dimension des Formkörpers (5) im Wesentlichen der Dimension des Rahmens (6) entspricht.

6. Verfahren nach einem der vorhergehenden Ansprüche, **dadurch gekennzeichnet, dass** nach dem Bauvorgang eine Entbinderung und/oder Sinterung durchgeführt wird.

7. Verfahren nach einem der Ansprüche 1-5, **dadurch gekennzeichnet, dass** nach dem Bauvorgang eine Entbinderung des Rahmens (10) und des Formkörpers (5) erfolgt und dass in einem weiteren Schritt der Formkörper (5) aus dem Rahmen (6) gelöst und anschließend gesintert wird.

8. Verfahren nach einem der vorhergehenden Ansprüche, **dadurch gekennzeichnet, dass** der Formkörper (5) aus dem Rahmen (6) gelöst wird, indem die stiftartigen Verbindungen (10) von dem Formkörper (5) abgetrennt werden.

9. Verfahren nach einem der vorhergehenden Ansprüche, **dadurch gekennzeichnet, dass** beim Bauvorgang eine integrale Rahmenanordnung (12) mit einer Vielzahl von Rahmen (6) und darin angeordneten Formkörpern (5) aufgebaut wird.

10. Verfahren nach Anspruch 9, **dadurch gekennzeichnet, dass** die Rahmenanordnung (12) eine Wabenstruktur aufweist, wobei sich benachbarte Rahmen (6) einen Rahmenwandabschnitt (13) teilen.

11. Verfahren nach einem der Ansprüche 9 und 10, **dadurch gekennzeichnet, dass** die Rahmenanordnung (12) mehrere übereinander gestapelte Rahmenanordnungsebenen (A, B, C, D), innerhalb derer jeweils mehrere Rahmen (6) und Formkörper (5) angeordnet sind, umfasst.

12. Verfahren nach Anspruch 11, **dadurch gekennzeichnet, dass** benachbarte Rahmenanordnungsebenen (A, B, C, D) voneinander beabstandet und durch integral ausgebildete Stege miteinander verbunden sind, so dass benachbarte Rahmenanordnungsebenen (A, B, C, D) durch Brechen der Stege voneinander trennbar sind.

13. Verfahren nach einem der vorhergehenden Ansprüche, **dadurch gekennzeichnet, dass** der schichtweise Aufbau des Formkörpers auf einer Bauplattform erfolgt, und dass integral mit dem Rahmen (6) und dem Formkörper (5) eine zusätzliche Stützstruktur (11) zwischen der der Bauplattform gegenüberliegenden Seite des Rahmens (6) und dem Formkörper (5) aufgebaut wird, um während des Bauvorgangs auf den Formkörper (5) wirkende Kräfte aufzunehmen.

## Claims

1. A method for producing shaped bodies (5) from a building material by means of an additive manufacturing method, in which during a construction process, a layerwise construction of a shaped body (5) takes place by successively solidifying layers of the building material through the action of electromagnetic radiation in a layer area having a contour specified for the respective layer,
wherein in the construction process together with the shaped body (5), a sleeve-like frame (6) surrounding the shaped body at a distance is constructed layer by layer from the building material, and wherein in addition in the construction process, a plurality of pin-like connections (10) is constructed integral with the frame (6) and the shaped body (5), which are distributed around the shaped body (5) and which connect the shaped body (5) with the frame (6),
**characterized in that** the shaped body (5) is a tooth replacement part, such as a tooth crown, and the pin-like connections (10) which connect the tooth replacement part (5) to the frame (6) are constructed on the oral or vestibular surfaces of the tooth replacement part (5).

2. The method according to claim 1, **characterized in that** the pin-like connections (10) are constructed on the inside of the frame (6).

3. The method according to claim 1 or 2, **characterized in that** the solidification of the building material takes place within the specified contour by location-selective electromagnetic radiation.

4. The method according to one of the preceding claims, **characterized in that** the building material is a ceramic slurry.

5. The method according to one of the preceding claims, **characterized in that** the dimension of the shaped body (5) substantially corresponds to the dimension of the frame (6) in the axial direction (7) of the sleeve-like frame (6).

6. The method according to one of the preceding claims, **characterized in that** after the construction process, a debinding and/or sintering is performed.

7. The method according to one of claims 1-5, **characterized in that** after the construction process, a debinding of the frame (10) and of the shaped body (5) takes place and that in a further step, the shaped body (5) is released from the frame (6) and subsequently is sintered.

8. The method according to one of the preceding claims, **characterized in that** the shaped body (5) is released from the frame (6) by separating the pin-like connections (10) from the shaped body (5).

9. The method according to one of the preceding claims, **characterized in that** an integral frame arrangement (12) having a plurality of frames (6) and shaped bodies (5) arranged therein are constructed during the construction process.

10. The method according to claim 9, **characterized in that** the frame arrangement (12) has a honeycomb structure, wherein adjacent frames (6) share a frame wall section (13).

11. The method according to one of claims 9 and 10, **characterized in that** the frame arrangement (12) comprises a plurality of frame arrangement planes (A, B, C, D) stacked over each other, within each of which a plurality of frames (6) and shaped bodies (5) are arranged.

12. The method according to claim 11, **characterized in that** adjacent frame arrangement planes (A, B, C, D) are spaced from each other and connected to each other by integrally formed webs so that adjacent frame arrangement planes (A, B, C, D) are separable from each other by breaking the webs.

13. The method according to one of the preceding claims, **characterized in that** the layerwise construction of the shaped body takes place on a construction platform, and that integral with the frame (6) and the shaped body (5), an additional support structure (11) is constructed between the side of the frame (6) opposite the construction platform and the shaped body (5) in order to absorb forces acting on the shaped body (5) during the construction process.

## Revendications

1. Procédé de fabrication de corps moulés (5) en un matériau de construction au moyen d'un procédé de fabrication additive, pour lequel pendant un processus de construction, une structure par couche d'un corps moulé (5) est effectuée par consolidation successive de couches du matériau de construction dans une zone de couche avec un contour prédéfini pour la couche respective par l'action du rayonnement électromagnétique,
dans lequel lors du processus de construction conjointement avec le corps moulé (5), un cadre (6) de type douille entourant le corps moulé à distance est constitué par couche, et dans lequel lors du processus de construction, une pluralité de liaisons (10) de type tige est en outre constituée d'un seul tenant avec le cadre (6) et le corps moulé (5), lesquelles sont réparties autour du corps moulé (5) et lesquelles relient le corps moulé (5) au cadre (6),
**caractérisé en ce que** le corps moulé (5) est une prothèse dentaire telle qu'une couronne dentaire, et les liaisons (10) de type tige qui relient le corps moulé (5) au cadre (6), sont constituées au niveau des surfaces buccales ou vestibulaires de la prothèse dentaire.

2. Procédé selon la revendication 1, **caractérisé en ce que** les liaisons (10) de type tige sont constituées au niveau du côté intérieur du cadre (6).

3. Procédé selon la revendication 1 ou 2, **caractérisé en ce que** la consolidation du matériau de construction est effectuée à l'intérieur du contour prédéfini par rayonnement électromagnétique localisé.

4. Procédé selon l'une quelconque des revendications précédentes, **caractérisé en ce que** le matériau de construction est une barbotine en céramique.

5. Procédé selon l'une quelconque des revendications précédentes, **caractérisé en ce que** la dimension du corps moulé (5) correspond sensiblement à la dimension du cadre (6) dans le sens axial (7) du cadre (6) de type douille.

6. Procédé selon l'une quelconque des revendications précédentes, **caractérisé en ce qu'**un déliage et/ou frittage est réalisé après le processus de construction.

7. Procédé selon l'une quelconque des revendications 1 à 5, **caractérisé en ce qu'**un déliage du cadre (10) et du corps moulé (5) est effectué après le processus de construction et que dans une autre étape, le corps moulé (5) est détaché du cadre (6) et ensuite fritté.

8. Procédé selon l'une quelconque des revendications précédentes, **caractérisé en ce que** le corps moulé (5) est détaché du cadre (6), **en ce que** les liaisons (10) de type tige sont séparées du corps moulé (5).

9. Procédé selon l'une quelconque des revendications précédentes, **caractérisé en ce que** lors du processus de construction, un agencement de cadre (12) d'un seul tenant est constitué avec une pluralité de cadres (6) et de corps moulés (5) agencés dedans.

10. Procédé selon la revendication 9, **caractérisé en ce que** l'agencement de cadre (12) présente une structure en nid d'abeille, dans lequel des cadres contigus (6) divisent une section de paroi de cadre (13).

11. Procédé selon l'une quelconque des revendications 9 et 10, **caractérisé en ce que** l'agencement de cadre (12) comporte plusieurs plans d'agencement de cadre (A, B, C, D) empilés les uns au-dessus des autres, à l'intérieur desquels respectivement plusieurs cadres (6) et corps moulés (5) sont agencés.

12. Procédé selon la revendication 11, **caractérisé en ce que** des plans d'agencement de cadre (A, B, C, D) contigus sont espacés les uns des autres et sont reliés les uns aux autres par des nervures réalisées d'un seul tenant de sorte que des plans d'agencement de cadre (A, B, C, D) contigus soient séparables les uns des autres par fracture des nervures.

13. Procédé selon l'une quelconque des revendications précédentes, **caractérisé en ce que** la structure par couche du corps moulé est effectuée sur une plate-forme de construction et que d'un seul tenant avec le cadre (6) et le corps moulé (5), une structure d'appui (11) supplémentaire est constituée entre le côté opposé à la plate-forme de construction du cadre (6) et le corps moulé (5) afin de recevoir des forces agissant sur le corps moulé (5) pendant le processus de construction.
